# EUROPÄISCHE PATENTSCHRIFT

(11) **EP 0 556 473 B1**
(45) Veröffentlichungstag und Bekanntmachung des Hinweises auf die Patenterteilung: **17.05.1995**
(21) Anmeldenummer: 92121063.9
(22) Anmeldetag: 10.12.1992
(51) Int. Cl.: G01G 21/28

(54) **Präzisionswaage**
Precision balance
Balance de précision

(30) Priorität: 18.02.1992 CH 474/92
(43) Veröffentlichungstag der Anmeldung: 25.08.1993
(73) Patentinhaber: Mettler-Toledo AG, 8606 Greifensee (CH)
(72) Erfinder: Luechinger, Paul, CH-8610 Uster (CH); Fringeli, Eduard, CH-8608 Bubikon (CH)

(56) Entgegenhaltungen:
- DE-A- 2 911 717
- DE-U- 8 507 282
- FR-A- 1 196 152
- US-A- 3 359 573
- EP-A2-347 520

## Beschreibung

Die Erfindung betrifft eine Präzisionswaage mit einer Waagschale und mit einem die Waagschale allseits umschliessenden Wägeraum, mit wenigstens einer seitlichen Fensteröffnung und einer in der oberen Abdeckung angebrachten, verschliessbaren Öffnung.

Aus dem deutschen Gebrauchsmuster G7736324 ist eine Präzisionswaage bekannt, bei der die Öffnung in der oberen Abschlussfläche des Wägeraumes mit einem Schiebefenster verschliessbar ist. Aus der Schweizer Patentschrift 461121 ist weiter eine Feinwaage bekannt, bei der die seitlichen Fenster als Schiebetüren ausgebildet und zum Öffnen des Wägeraumes in Führungsschienen am Gehäuse nach hinten verschiebbar sind.

Zum vollständigen Freilegen der Wägeraumöffnung, seitlich oder oben, müssen die Schiebefenster/-türen weit nach hinten geschoben werden können. In dieser Stellung übertagen sie bei Waagen, deren Elektronik und Wägezelle unter dem Wägeraum angeordnet sind, die Rückwand des Waagengehäuses. Damit eine Verschiebung der Türen oder Fenster überhaupt möglich ist, muss die Waage stets in einem Abstand von hinter der Waage angeordneten Geräten oder von der Raumwand aufgestellt werden. Im weiteren ist die Ausbildung von Führungen, die über das Waagengehäuse hinausragen, technisch aufwendig und unschön. Wenn hingegen keine einwandfreie Führung vorliegt, verkeilt sich das meist wesentlich höhere als breite Fenster, sobald es zu mehr als der Hälfte aus dem Waagengehäuse hinausgeschoben wird.

Die Aufgabe der vorliegenden Erfindung besteht nun darin, eine Präzisionswaage zu schaffen, bei der die Öffnungen am Wägeraum - seitlich und/oder oben - vollständig freigelegt werden können, ohne dass nach hinten verschobene Fenster über das Waagengehäuse hinausragen und ohne dass sie sich beim Verschieben in den Führungsbahnen verklemmen können.

Diese Aufgabe wird dadurch gelöst, dass mindestens eine der Öffnungen durch ein Fenster verschliessbar ist, das aus wenigstens zwei relativ zueinander verschiebbaren Fensterabschnitten besteht, und dass die Fensterabschnitte sich in jeder Stellung teilweise überlappen.

Die Aufteilung der Fensterflächen in zwei relativ zueinander und übereinander verschiebbare Fensterabschnitte bzw. Türabschnitte erlaubt es, den Raum, den die nach hinten verschobenen Abschnitte beanspruchen, ungefähr zu halbieren; bei einer Aufteilung in drei Teile ungefähr zu dritteln.
Die Fensterabschnitte können in parallel verlaufende, einander gegenüberliegende Führungen eingesetzt werden. Die sich überlappenden Kanten der Fensterabschnitte gelangen in Anlage mit Mitnehmern, welche die Oberflächen der Fensterabschnitte überragen, und ermöglichen ein selbsttätiges Mitziehen des jeweils benachbarten Fensterabschnittes beim Oeffnen und beim Schliessen. Zudem erlauben die Mitnehmer, wenn sie sich über die gesamte Kantenlänge erstrecken, bei geschlossenem Fenster eine einwandfreie Abdichtung des Wägeraumes, ohne dass Dichtmittel in Anlage mit den aus Glas oder Kunststoff bestehenden Fernstern gelangen und letztere verunreinigen und das Verschieben erschweren können. Durch Anheben eines oben liegenden Fensters kann dieses ausser Eingriff mit dem darunter liegenden gebracht und so die Fensterabschnitte einzeln, z.B. für die Reinigung, rückseitig aus den Führungen herausgeschoben werden. Eine Verriegelung, die ein unbeabsichtigtes Herausfallen der Fensterabschnitte im Wägebetrieb verhindert, ist nicht notwendig, wenn der Mitnehmer des zuunterst liegenden Fensterabschnittes in Anschlag mit der Wägeraumrückwand gelangt.

Wenn anstelle oder zusätzlich zu den Mitnehmern an der Gehäuserückwand der Waage eine in vertikalen Führungen verschiebbare Kurzanleitung eingeschoben ist, so können die Fensterabschnitte in der Abdeckung erst nach dem vollständigen Herausziehen der Kurzanleitung aus den seitlichen Führungen herausgeschoben werden.

Anhand eines illustrierten Ausführungsbeispieles wird die Erfindung näher erläutert. Es zeigen:
- Figur 1: eine perspektivische Darstellung einer Präzisionswaage,
- Figur 2: einen Querschnitt längs Linie II-II in Figur 1 im Bereich der oberen Abdeckung des Wägeraumes,
- Figur 3: einen Schnitt längs Linie III-III in Figur 2,
- Figur 4: einen Schnitt durch den Überlappungsbereich zweier Schiebefenster, vergrössert dargestellt, und
- Figuren 5/6: je eine Ausgestaltung der oberen Führungen der seitlichen Fensterabschnitte.

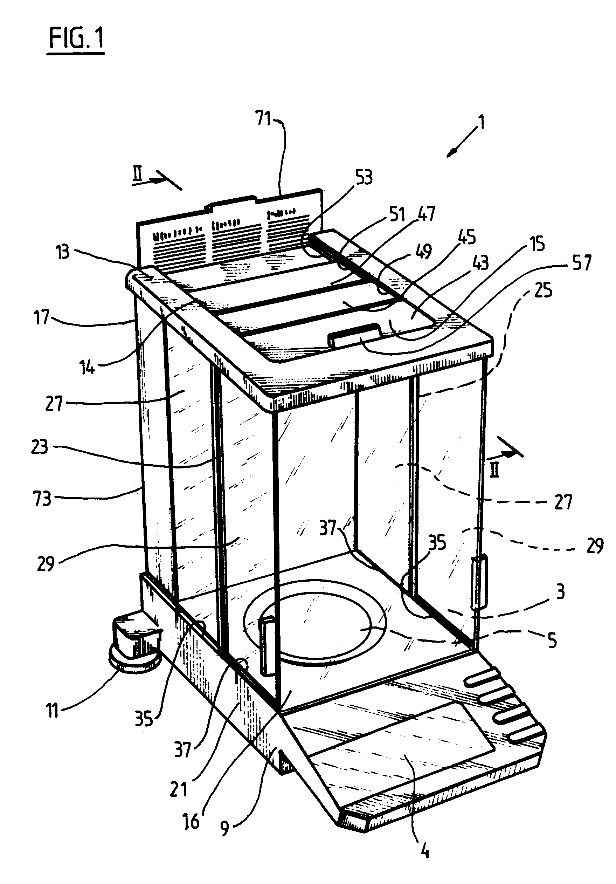

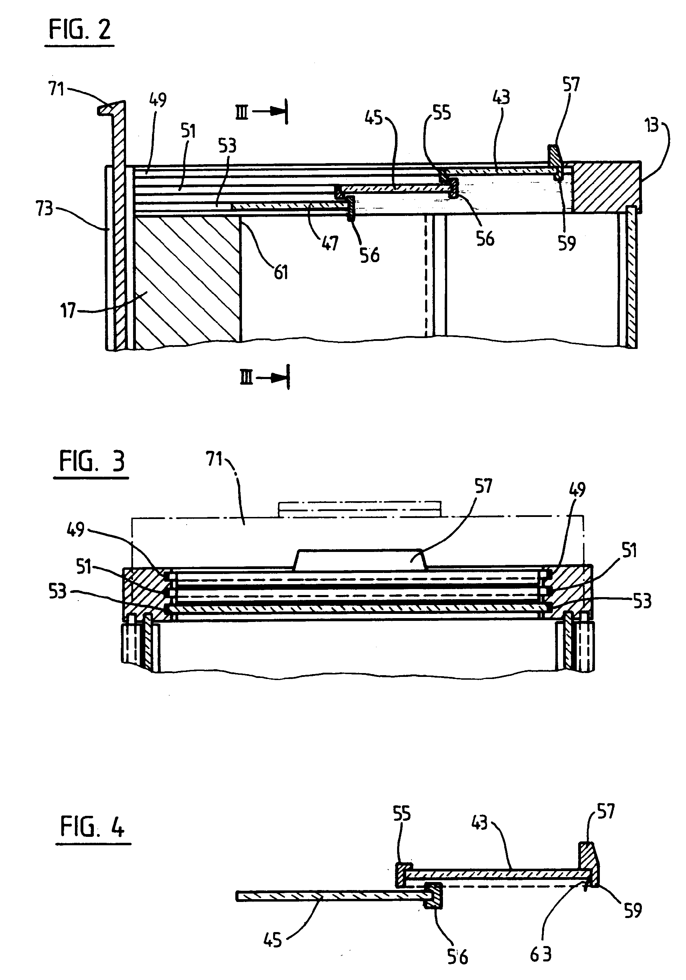

Die in Figur 1 dargestellte Waage 1 weist einen Wägeraum 3 mit im wesentlichen rechteckigem Querschnitt auf. In dessen Zentrum ist die Waagschale 5 angeordnet. Auf der Vorderseite der Waage 1 ist ein geneigt zur Horizontalen liegendes Bedienungs- und Tastaturfeld 4 sichtbar. Unterhalb des Wägeraumes 3 sind im Gehäuse 9 die elektronischen und die mechanischen Wägeelemente untergebracht. Die Waage 1 steht auf drei Füssen 11, von denen nur ein einziger sichtbar ist. Der Wägeraum 3 ist oben durch eine Abdeckung 13 verschlossen. In der Abdeckung 13 ist eine Öffnung 14 mit einem Fenster 15 eingelassen, welches zur Beschickung der Waage 1 geöffnet und vor dem Wägevorgang wieder verschlossen werden kann. Die Rückseite der Waage 1 wird durch eine Rückwand 17 gebildet, die die Abdeckung 13 trägt. Auf der Vorderseite wird der Wägeraum 3 durch eine Frontscheibe 16 begrenzt, die unten am Gehäuse 9 und oben an der Abdeckung 13 befestigt ist. Seitlich wird der Wägeraum 3 durch je ein sowohl an der Gehäusebodenoberseite 21 als auch an der Unterseite der Abdeckung 13 längsgeführtes Seitenfenster 23,25 abgeschlossen. Die beiden Seitenfenster 23,25 bestehen aus je zwei oder mehreren Fensterabschnitten 27,29, die entlang von im Gehäuseboden 21 und in der Abdeckung 13 angebrachten nutförmigen Führungen 35,37 verschiebbar sind. Bei geschlossenem Wägeraum 3 überlappen sich die beiden Fensterabschnittpaare 27,29 um einige Millimeter.
Das Schiebefenster 15 in der oberen Abdeckung 13 weist im dargestellten Beispiel drei Fensterabschnitte 43,45 und 47 auf. Für jeden der Fensterabschnitte 43,45,47 ist in der Abdeckung 13 entlang der Öffnung 14 beidseitig je eine Führungsnut 49,51,53 eingelassen (vergleiche auch Figuren 2 und 3). Die Führungsnuten 51 und 53 sind jeweils nur gerade so lang ausgebildet, dass beim Schliessen die Fensterabschnitte 45 und 47 am Ende der Nuten 51,53 anschlagen und die Mitnehmer 55 der darüberliegenden Fensterabschnitte 43,45 anstossen. An den sich überlappenden Kanten der Fensterabschnitte 43,45,47 sind Mitnehmer 55,56 in Gestalt von Leisten befestigt, welche die Oberflächen der Fensterabschnitte 43, 45,47 jeweils in Richtung zum überlappenden, benachbarten Fensterabschnitt überragen. Am zuoberst liegenden Fensterabschnitt 43 ist zudem ein Handgriff 57 befestigt, an dem eine die Unterseite des Fensterabschnittes 43 überragende Nase 59 angebracht ist. Die Nase 59 kann auch als selbständiger Mitnehmer an der Vorderkante oder an der Unterseite des Fensterabschnittes 43 befestigt sein und übertagt dessen Unterseite gerade soweit, dass eine geringe vertikale Überlappung mit dem Mitnehmer 55 am benachbarten - hier darunterliegenden - Fensterabschnitt 45 erfolgt, die eine Mitnahme ermöglicht (Figur 4). Die gegenseitige vertikale Ueberlappung der Mitnehmer 55, bzw. der Nase 59, ist sehr klein und kann im Bereich von einem Millimeter liegen.

Zum Freilegen der Öffnung 15 schiebt die Bedienungsperson den Fensterabschnitt 43 am Griff 57 nach hinten. Beim Zurückschieben des Fensterabschnittes 43 gelangt die Nase 59 in Anlage mit dem Mitnehmer 56 am Fensterabschnitt 45 und schiebt auch dieses synchron nach hinten. Sobald der Fensterabschnitt 45 in Überdeckung mit dem zuhinterst und zuunterst liegenden Fensterabschnitt 47 geführt ist, gelangt auch der Mitnehmer 55 am Fensterabschnitt 45 in Anlage mit dem Mitnehmer 56 am Fensterabschnitt 47 und schiebt auch diesen nach hinten. In der Endstellung liegen die drei Fensterabschnitte 43,45,47 versetzt um den Betrag der Breite der sich berührenden Mitnehmer 55,56 übereinander und als Paket über der Rückwand 17 der Waage 1. Wenn die Mitnehmer im Bereich der vertikal die Oberfläche des zugehörigen Abschnittes überragenden Teiles sehr dünn ausgebildet sind, so bilden die Fensterabschnitte im wesentlichen einen senkrecht übereinanderliegenden Stapel. Die Öffnung 14 ist nun vollständig freigelegt und der Wägeraum 3 zugänglich.
Am zuunterst liegenden Fensterabschnitt 47 kann ebenfalls ein Mitnehmer 56 mit nach unten ragender Nase angebracht sein, welcher an der Vorderkante 61 der Rückwand 17 anzustossen bestimmt ist und verhindert, dass die Fensterabschnitte 43,45,47 unbeabsichtigt hinten aus den Führungsschienen 49,51,53 herausfallen können. Ein hinterer Abschluss der horizontalen Führungen 49,51,53 kann auf diese Weise entfallen.
Zum Schliessen der Öffnung 15 wird der Fensterabschnitt 43 am Handgriff 57 nach vorne gezogen. Dabei gelangt der Mitnehmer 55 in Anlage an der Hinterseite des Mitnehmers 56 am darunter liegenden Fensterbschnitt 45 und zieht dieses ebenfalls synchron nach vorne. Beim weiteren Vorschieben der beiden Fensterabschnitte 43,45 wird auch der Fensterabschnitt 47 mitgeschleppt, bis die Öffnung 14 vollständig geschlossen ist. Die Abdichtung der Öffnung 14 erfolgt durch gegenseitigen Kontakt der Mitnehmer 55,56; die Mitnehmer 55,56 berühren die Gläser der Fensterabschnitte 43,45,47 hingegen in keinem Zeitpunkt. Die Bildung von Schlieren oder Kratzern wird dadurch vermieden.

In analoger Weise können auch die vertikal angeordneten Wandabschnitte 27,29 entlang den Führungen 35,37 zum Öffnen des Wägeraumes 3 teleskopartig nach hinten verschoben werden, wenn an den Kanten entsprechend ausgebildete, sich horizontal überlappende Mitnehmer (nicht dargestellt) befestigt sind.

Zum Reinigen der Fensterabschnitte 43,45,47 können diese werkzeugfrei an der Rückseite aus den Führungen 49,51,53 herausgeschoben werden. Dazu wird der jeweils oben liegende Fensterabschnitt angehoben, damit der jeweilige Mitnehmer (z.B. 59) über den darunterliegenden Mitnehmer (z.B. 56) geschoben werden kann. Damit der unterste Mitnehmer 56 nicht an der Vorderkante 61 der Rückwand 17 hängen bleibt, muss er ebenfalls leicht angehoben werden. Um dies zu ermöglichen, sind die Führungen 53 breiter ausgebildet als die Fensterabschnitte dick sind.

Die horizontalen Führungen 49,51,53 können hinten auch durch eine vertikal verschiebbare Tafel 71, auf der eine Kurzanleitung für den Gebrauch der Waage aufgedruckt ist, abgeschlossen sein. Die Tafel 71 ist seitlich in Führungsnuten 73 geführt und derart ausgebildet, dass sie in jeder vertikalen Position geklemmt gehalten wird. Zum Herausnehmen der Fensterabschnitte 43,45,47 wird die Tafel 71 vollständig oben an deren Führungen 73 herausgezogen.
Die Tafel 71 kann auch als Ersatz für eine sonst benötigte Transportverriegelung für das obenliegende Fenster dienen.

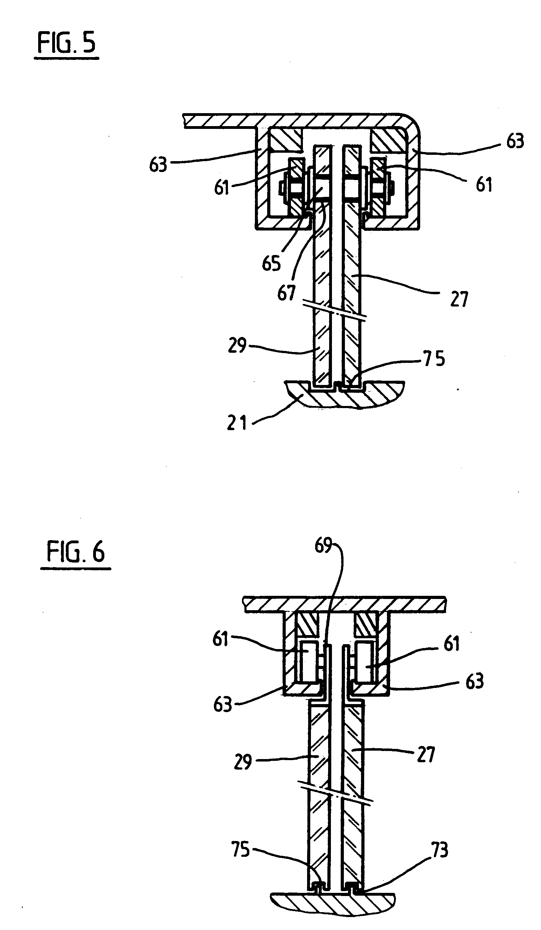

Damit die schmalen, hohen und seitlichen Fensterabschnitte 27,29 reibungsarm gleiten und nicht verkanten können, sieht die Erfindung weiter vor, an den oberen Schmalseiten Rollen 61 anzuordnen, welche auf U-förmigen Schienen 63 abwälzen. Die Achsen 65 der Rollen 61 können gemäss Ausbildung nach Figur 5 in Bohrungen 67 in den Fensterabschnitten 27,29 eingepresst oder eingeleimt sein. Es ist auch möglich, die Rollen 61 an L-förmigen Laschen 69, die auf den oberen Stirnkanten der Fensterabschnitte 27,29 befestigt sind, zu lagern (Figur 6). Die Unterkanten der Fensterabschnitte 27,29 können in Nuten 75 am Gehäuseboden 21 oder durch im Gehäuseboden 21 eingesetzte Stifte oder Rippen 73, die in Nuten 75 eingreifen, geführt sein (Figur 5 bzw. 6).

## Patentansprüche

1. Präzisionswaage (1) mit einer Waagschale (5) und mit einem die Waagschale allseits umschliessenden Wägeraum (3) mit wenigstens einer seitlichen Fensteröffnung (23,25) und einer in der oberen Abdeckung (13) angebrachten, verschliessbaren Öffnung (14), dadurch gekennzeichnet, dass mindestens eine der Öffnungen (14;23,25) durch ein Fenster (15; 23,25) verschliessbar ist, das aus wenigstens zwei relativ zueinander verschiebbaren Fensterabschnitten (43,45,47; 27,29) besteht, und dass die Fensterabschnitte (43,45,47; 27,29) sich in jeder Stellung teilweise überlappen.

2. Präzisionswaage nach Anspruch 1, dadurch gekennzeichnet, dass jeder der Fensterabschnitte (43,45,47; 27,29) in je zwei parallel verlaufenden, einander gegenüberliegenden Führungen (49,51,53; 35,37) verschiebbar gelagert ist.

3. Präzisionswaage nach einem der Ansprüche 1 oder 2, dadurch gekennzeichnet, dass an den sich überlappenden Kanten der Fensterabschnitte (43,35,47; 27,29) Mitnehmer (55,56) befestigt sind, welche die Oberflächen der Fensterabschnitte (43,45,47; 27,29) überragen und sich gegenseitig senkrecht zur Verschiebeebene überlappen.

4. Präzisionswaage nach Anspruch 3, dadurch gekennzeichnet, dass die Mitnehmer (55) an den gegenseitigen Berührungsstellen Dichtflächen aufweisen.

5. Präzisionswaage nach einem der Ansprüche 2 bis 4, dadurch gekennzeichnet, dass die Führungen (49,51) breiter ausgebildet sind als die Dicke der Fensterabschnitte (43,45).

6. Präzisionswaage nach einem der Ansprüche 1 bis 5, dadurch gekennzeichnet, dass an den Oberkanten der Fensterabschnitte (27,29) Rollen (61) befestigt sind.

7. Präzisionswaage nach Anspruch 6, dadurch gekennzeichnet, dass die Achsen (65) der Rollen (61) in Bohrungen (67) in den Fensterabschnitten (27,29) eingeklebt oder eingepresst sind oder dass die Achsen (65) der Rollen (61) an L-förmigen Laschen (69) befestigt sind.

8. Präzisionswaage nach einem der Ansprüche 6 oder 7, dadurch gekennzeichnet, dass die Unterkanten der Fensterabschnitte (27,29) in Nuten (71) im Gehäuseboden (21) oder durch Stifte oder Rippen (73) am Gehäuseboden (21) geführt sind.

9. Präzisionswaage nach einem der Ansprüche 1 bis 8, dadurch gekennzeichnet, dass an der Rückwand (17) eine Tafel (71) in vertikalen Führungen (73) verschieb- und klemmbar geführt ist.

10. Präzisionswaage nach Anspruch 9, dadurch gekennzeichnet, dass die Tafel (71) eine Bedienungsanleitung ist.

## Claims

1. A precision balance (1) with a weighing pan (5) and with a weighing space (3) which encloses the weighing pan on all sides, with at least one lateral window opening (23, 25) and a closable opening (14) provided in the upper cover (13), characterised in that at least one of the openings (14; 23, 25) is closable by a window (15; 23, 25) which comprises at least two window portions (43, 45, 47; 27, 29) which are displaceable relative to each other, and that the window portions (43, 45, 47; 27, 29) partially overlap in any position.

2. A precision balance according to claim 1 characterised in that each of the window portions (43, 45, 47; 27, 29) is mounted displaceably in two guides (49, 51, 53; 35, 37) which extend parallel and which are disposed opposite to each other.

3. A precision balance according to one of claims 1 and 2 characterised in that entrainment members (55, 56) are fixed to the mutually overlapping edges of the window portions (43, 45, 47; 27, 29), the entrainment members projecting beyond the surfaces of the window portions (43, 45, 47; 27, 29) and mutually overlapping perpendicularly to the plane of displacement.

4. A precision balance according to claim 3 characterised in that the entrainment members (55) have sealing surfaces at the mutual contact locations.

5. A precision balance according to one of claims 2 to 4 characterised in that the guides (49, 51) are wider than the thickness of the window portions (43, 45).

6. A precision balance according to one of claims 1 to 5 characterised in that rollers (61) are fixed to the upper edges of the window portions (27, 29).

7. A precision balance according to claim 6 characterised in that the spindles (65) of the rollers (61) are glued or pressed into bores (67) in the window portions (27, 29) or that the spindles (65) of the rollers (61) are fixed to L-shaped bars (69).

8. A precision balance according to one of claims 6 and 7 characterised in that the lower edges of the window portions (27, 29) are guided in grooves (71) in the housing bottom (21) or by pins or ribs (73) on the housing bottom (21).

9. A precision balance according to one of claims 1 to 8 characterised in that a panel (71) is displaceably and clampably guided in vertical guides (73) at the rear wall (17).

10. A precision balance according to claim 9 characterised in that the panel (71) is a set of operating instructions.

## Revendications

1. Balance de précision (1) comprenant un plateau (5) et une enceinte de pesage (3) qui entoure le plateau de tous côtés et qui est pourvue d'au moins une ouverture latérale formant fenêtre (23, 25) et d'une ouverture (14) ménagée dans le couvercle supérieur (13) et pouvant être fermée, caractérisée en ce qu'au moins l'une des ouvertures (14 ; 23, 25) peut être fermée par une fenêtre (15 ; 23, 25) constituée d'au moins deux parties de fenêtre (43, 45, 47 ; 27, 29) coulissant l'une par rapport à l'autre, et en ce que les parties de fenêtre (43, 45, 47 ; 27, 29) se chevauchent partiellement dans toutes les positions.

2. Balance de précision selon la revendication 1, caractérisée en ce que chacune des parties de fenêtre (43, 45, 47 ; 27, 29) est montée coulissante dans deux guides parallèles superposés (49, 51, 53 ; 35, 37).

3. Balance de précision selon l'une des revendications 1 ou 2, caractérisée en ce que, sur les bords chevauchants des parties de fenêtre (43, 45, 47 ; 27, 29), sont fixés des éléments d'entraînement (55, 56) qui dépassent des surfaces des parties de fenêtre (43, 45, 47 ; 27, 29) et se chevauchent mutuellement perpendiculairement au plan de coulissement.

4. Balance de précision selon la revendication 3, caractérisée en ce que les éléments d'entraînement (55) comportent des surfaces d'étanchéité au niveau de leurs points de contact mutuels.

5. Balance de précision selon l'une des revendications 2 à 4, caractérisée en ce que les guides (49, 51) sont plus larges que l'épaisseur des parties de fenêtre (43, 45).

6. Balance de précision selon l'une des revendications 1 à 5, caractérisée en ce que des roulettes (61) sont fixées aux bords supérieurs des parties de fenêtre (27, 29).

7. Balance de précision selon la revendication 6, caractérisée en ce que les axes (65) des roulettes (61) sont collés ou emmanchés à force dans des perçages (67) des parties de fenêtre (27, 29), ou en ce que les axes (65) des roulettes (61) sont fixés à des pattes en L (69).

8. Balance de précision selon l'une des revendications 6 ou 7, caractérisée en ce que les bords inférieurs des parties de fenêtre (27, 29) sont guidés dans des rainures (71) du fond (21) du boîtier ou au moyen de broches ou de nervures (73) insérées dans le fond (21) du boîtier.

9. Balance de précision selon l'une des revendications 1 à 8, caractérisée en ce que, sur la paroi arrière (17), un tableau (71) est guidé avec possibilité de coulissement et de coincement dans des guides verticaux (73).

10. Balance de précision selon la revendication 9, caractérisée en ce que le tableau (71) est un mode d'emploi.
